# EUROPÄISCHE PATENTSCHRIFT

(11) **EP 2 411 645 B1**
(45) Veröffentlichungstag und Bekanntmachung des Hinweises auf die Patenterteilung: **13.03.2013**
(21) Anmeldenummer: 10709694.3
(22) Anmeldetag: 16.03.2010
(51) Int. Cl.: F02D 9/10, F02D 9/04, F16C 27/00, F16C 25/00, F16C 27/02

(54) **KLAPPENANORDNUNG, INSBESONDERE ABGASKLAPPENANORDNUNG**
FLAP ASSEMBLY, IN PARTICULAR EXHAUST GAS FLAP ASSEMBLY
AGENCEMENT DE VOLET, EN PARTICULIER AGENCEMENT DE VOLET POUR GAZ D'ÉCHAPPEMENT

(30) Priorität: 24.03.2009 DE 102009014140
(43) Veröffentlichungstag der Anmeldung: 01.02.2012
(73) Patentinhaber: MTU FRIEDRICHSHAFEN GMBH, 88045 Friedrichshafen (DE)
(72) Erfinder: HEGNER, Ronald, 88048 Friedrichshafen (DE); THOSS, Andreas, 88677 Markdorf (DE)
(74) Vertreter: Winter, Josef
(86) Internationale Anmeldenummer: PCT/EP2010/001646
(87) Internationale Veröffentlichungsnummer: WO 2010/108620

(56) Entgegenhaltungen:
- WO-A1-2010/026100
- DE-A1-102007 039 003
- DE-C1- 10 157 512
- FR-A- 1 435 649
- US-A- 6 022 000

## Beschreibung

Die Erfindung betrifft eine Abgasklappenanordnung gemäß dem Oberbegriff des Anspruches 1.

Eine Abgasklappenanordnung der vorgenannten Art ist beispielsweise aus der DE 37 07 904 A1 bekannt und sieht bezogen auf eine Anordnung mit im Abgaskanal liegender Klappe und ein- oder beidseitig des Abgaskanals liegender gehäuseseitiger Lagervorrichtung für die die Abgasklappe tragende Welle eine Ausbildung der Lagervorrichtung vor, über die temperatur- und fertigungsbedingt auftretende Toleranzen und Desachsierungen ausgeglichen werden sollen. Die Welle ist hierzu in zumindest einem seitlich zum Abgaskanal in Wellenrichtung auskragenden gehäuseseitigen Ringbund drehbar in zumindest einem Lagerkörper gelagert, der als sphärischer Lagerkörper in einem sich in Richtung auf den Kanal konisch verjüngenden Teil des Ringbundes geführt und in Richtung auf den Abgaskanal axial federnd beaufschlagt ist. Der Aufbau einer solchen Lagervorrichtung bedingt wegen der drehbaren und axial verschieblichen Führung der Welle zum Lagerkörper insbesondere in Anbetracht der Arbeitsgegebenheiten ein gewisses Radialspiel zwischen der Welle und der die Welle aufnehmenden zylindrischen Bohrung des Lagerkörpers, das über die axiale Verstellbarkeit des Lagerkörpers ebenso wenig ausgeglichen werden kann wie über dessen zum Ausgleich von Verzügen und Desachsierungen sphärische Abstützung gegenüber dem sich verjüngenden Teil des Ringbundes. Daraus ergeben sich insbesondere in Verbindung mit Abgaspulsationen Bewegungen zwischen der Welle und dem Lagerkörper, die zu einem erhöhten Lagerverschleiß und einem Ausschlagen der Lagervorrichtung führen.

Prinzipiell ähnliche Gegebenheiten liegen auch bei Abgasklappenanordnungen vor, wie sie aus der WO 2008/043429 A1 bekannt sind.

Aus der DE 10 157 512 C1 geht eine Klappenanordung als bekannt hervor, bei der ein segmentierter Lagerkörper für die Klappenwelle radial federnd auf eine vorgegebene Radiallage verspannt ist. Als Federmittel dient eine gegen den segmentierten Lagerkörper verspannte, axial wirkende Feder, die den Lagerkörper gegen eine sich verjüngende Schräge an einem Ringbund drückt. Der Ringbund ist an einem Tragkörper vorgesehen.

In der US 6 022 000 A ist ein Klappenventil dargestellt, dessen Welle zur Erzeugung einer abdichtenden Kraft mit einem radial beweglichen Klemmmittel ausgebildet ist. Als Klemmmittel dienen in einer Ausführungsform metallische Schraubenfedern, die auf einen an der Welle anliegenden, verformbaren Kragen einer Dichtungsmanschette drücken.

In der FR 1 435 649 B ist eine Abdichtung einer Spindel eines Hahnventils durch federnde Mittel beschrieben. Zur Abdichtung ist ein auf der Spindel anliegender konischer Dichtungskörper vorgesehen. Der Dichtungskörper ist in ein metallisches Pressteil eingepasst mit einer entsprechenden konischen Bohrung. Durch ein am Pressteil angreifendes axial wirkendes Federmittel wird eine radiale Belastung des Dichtungskörpers bewirkt.

Der Erfindung liegt die Aufgabe zugrunde, eine weitere, verbesserte Klappenanordnung zu schaffen, insbesondere eine Klappenanordnung der vorgenannten Art in einer Weise auszugestalten, dass diese fertigungstechnisch gut zu beherrschen ist und auch bei groben Tolerierungen noch in ihrem Verschleißverhalten befriedigt.

Erreicht wird dies bei einer Klappenanordnung der eingangs genannten Art mit den Merkmalen des Anspruches 1. Die nachfolgenden Ansprüche geben zweckmäßige Weiterbildungen an.

Bei der Erfindung wird für eine Abgasklappenanordnung mit pulsierender Beaufschlagung durch einen Gasstrom, davon ausgegangen, dass die jeweilige Gasklappe in einer gehäuseseitigen Lagervorrichtung über einen Lagerkörper geführt und abgestützt ist, der radial nachgiebig, insbesondere federnd auf eine vorgegebene Radiallage abgestützt ist. Die nachgiebige, insbesondere federnde Verspannung des Lagerkörpers auf die vorgegebene Radiallage macht es möglich, den Lagerkörper "spielfrei", quasi schwimmend zu führen, und dies auch unter Arbeitsbedingungen, wie sie beispielsweise für Abgasklappen gegeben sind, da über die radial federnde Verspannung zumindest in radialer Richtung eine Nachgiebigkeit in der Abstützung und Führung des Lagerkörpers gegeben ist, über die sich betriebsbedingt auftretende Dimensionsänderungen kompensieren lassen; sei es, dass der Lagerkörper zur Klappe drehbar ist oder mit der Klappe dreht.

Die radial nachgiebige, insbesondere federnde Abstützung auf eine vorgegebene Radiallage ist bevorzugt eine Abstützung auf eine zentrale Solllage des Lagerkörpers und wird erfindungsgemäß insbesondere über einen Ringbund der Lagervorrichtung vorgenommen, gegen den der Lagerkörper umfangsseitig abgestützt und federnd verspannt ist, wobei der Ringbund auf in Umfangsrichtung getrennte Ringsektoren aufgeteilt ist, die radial zum Lagerkörper zumindest teilweise federnd anliegen. So kann der Ringbund im Rahmen der Erfindung beispielsweise durch Spannfinger gebildet sein, die von einem gemeinsamen Tragkörper ausgehen und quer zu ihrer axialen Erstreckung radial federnd einen Aufnahmekäfig für den Lagerkörper bilden. Insbesondere ergänzend können die Finger auch über eine umschließende "Federmanschette" auf ihre gemeinsame, durch den lagefesten Ringsektor bestimmte Zentrumslage vorgespannt sein, wobei eine solche "Manschette" durch eine oder mehrere Ringfedern, bevorzugt aber durch eine umschließende Schraubenfeder gebildet ist.

Im Rahmen der Erfindung liegt es insbesondere auch, eine Radiallage als Solllage für den Lagerkörper über den Ringbund dadurch vorzugeben, das von den in Umfangsrichtung getrennten Ringsektoren, die radial federnd zusammengespannt sind, zumindest einer eine radial nicht nachgiebige Abstützung für den Lagerkörper bildet, auf die der Lagerkörper über die radial federnden und/oder federnd abgestützten Sektoren des Ringbundes angelegt ist.

Bei einer solchen Lösung ist zumindest einer der Ringsektoren des Ringbundes ein lagefester Teil der Lagervorrichtung, gegen den der Lagerkörper über weitere, radial federnde Ringsektoren abgestützt ist. Diese federnd abstützenden Ringsektoren können im Rahmen der Erfindung auch durch separate Elemente gebildet sein, die lediglich über die den Ringbund radial federnd zusammenhaltende Spannvorrichtung gehalten und mit über den zur Lagervorrichtung lagefesten Ringsektor zum Ringbund verbunden sind. Bei einer solchen Lösung bildet dann der zur Lagervorrichtung lagefeste Ringsektor die radiale Anlage für den Lagerkörper und gleichzeitig die Führungsbasis für die anderen, separaten Ringsektoren, welche mit dem die Basis bildenden Ringsektor über die radialen Spannmittel verbunden sind. Der Ringbund kann somit quasi "atmen" und, im Rahmen der geforderten kleinen Stellwege, gegenüber dem lagefesten Ringsektor als Basis ausbauchen.

Dies ist im Rahmen der Erfindung sowohl bei zylindrischer wie auch balliger Berührfläche zwischen Ringbund und Lagerkörper möglich, so dass nicht nur temperaturbedingte Maßänderungen ausgeglichen werden können, sondern auch in entsprechenden Größenordnungen liegende Fertigungstoleranzen und Achsfehler abgeglichen werden können.

Grundsätzlich liegt es im Rahmen der Erfindung, dass der Lagerkörper zur jeweiligen Gasklappe einstückig ausgebildet ist. Bevorzugt aber bildet der Lagerkörper insbesondere bei einander gegenüberliegender Lagerung der Gasklappe zum Gehäuse der Klappenanordnung einen zur Welle der Klappe drehbaren Bestandteil der sphärischen Lagerung für die Klappe, insbesondere Gasklappe. Diese sphärische Lagerung umfasst bevorzugt ein Kugelsegment und eine sich gegen das Kugelsegment aufweitende und dieses aufnehmende Ausnehmung, wobei das Kugelsegment oder die Ausnehmung am Lagerkörper vorgesehen ist. Bevorzugt bildet das Kugelsegment einen zur Klappe, insbesondere Gasklappe, in Richtung der Drehachse derselben axial überstehenden Teil, der von der im Lagerkörper vorgesehenen Ausnehmung aufgenommen ist, wobei erfindungsgemäß der Lagerkörper axial gegenüber dem den Ringbund tragenden, zum Gehäuse festgelegten Tragkörper der Lagervorrichtung federnd abgestützt ist. Damit ist eine gegen Toleranzen und gegen betriebsbedingte Verschmutzungen unempfindliche Führung für die Klappe, insbesondere die Gasklappe erreicht, die in vorteilhafter Weise auch die Anordnung und Abstützung der zur Verstellung der Klappe erforderlichen Welle ermöglicht.

Es ergibt sich somit eine im Aufbau einfache und toleranzunempfindliche Klappenanordnung, die auch gasdicht zu gestalten, insbesondere gut zu kapseln ist.

Weitere Einzelheiten und Merkmale der Erfindung ergeben sich aus den Ansprüchen, der Zeichnungsbeschreibung und den Figuren. Es zeigen:
- Fig. 1: einen schematisierten Querschnitt durch eine Abgasklappenanordnung,
- Fig. 2: eine isolierte und vereinfachte Darstellung der gehäuseseitigen Lagervorrichtung in einer Ansicht gemäß Pfeil II in Fig. 1, und
- Fig. 3: einen Schnitt III-III durch die Lagervorrichtung gemäß Fig. 2.

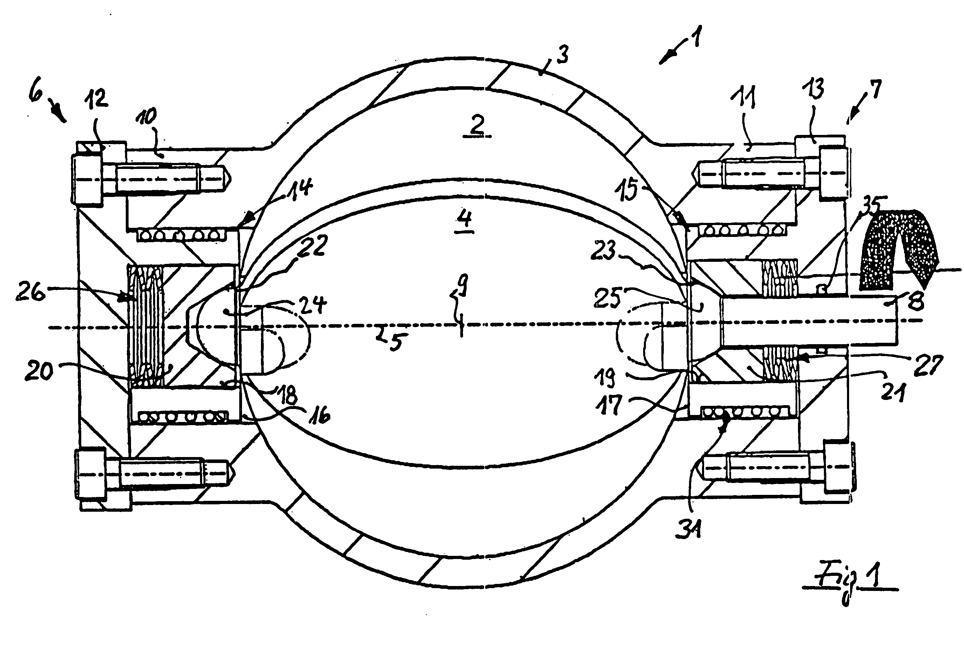

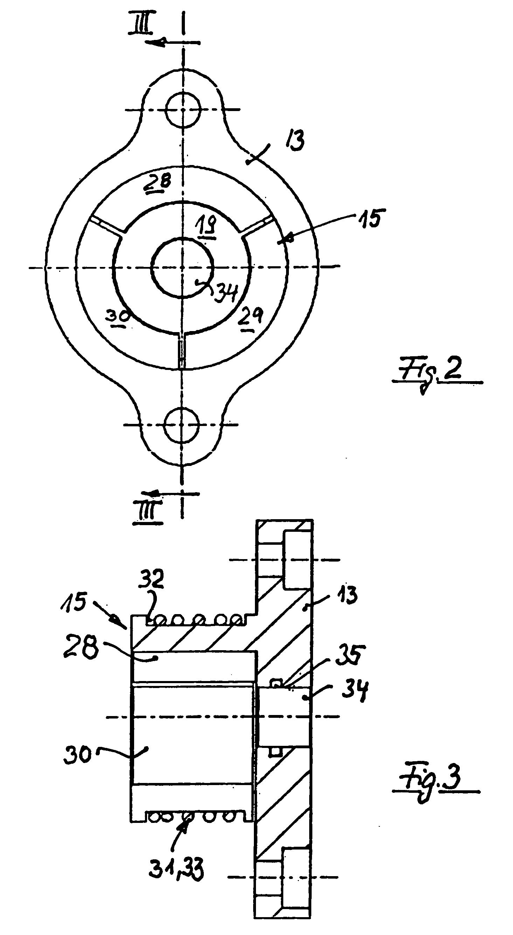

In dem in Fig. 1 gezeigten Schnitt durch eine Abgasklappenanordnung 1 ist das den Abgaskanal 2 umgrenzende Gehäuse mit 3 bezeichnet. Im Abgaskanal 2 liegt die Klappe 4, die um eine quer zum Abgaskanal 2 verlaufende Achse 5 drehbar, im Ausführungsbeispiel beidseitig des Abgaskanales 2 geführt ist. Von den hierfür vorgesehenen Lagervorrichtungen 6, 7 ist die Lagervorrichtung 7 von der mit der Klappe 4 verbundenen, in Richtung der Achse 5 sich erstreckenden Welle 8 durchsetzt, an der in nicht gezeigter Weise der Stellantrieb für die Klappe 4 angreift. Die Welle 8 durchsetzt einen Tragkörper 13 in einer Durchgangsöffnung 34, bevorzugt über eine Dichtung 35 abgedichtet (Fig. 2 und 3).

Eine solche Abgasklappenanordnung 1 ist bevorzugt für den Einsatz in Abgassystemen von Motoren, insbesondere Dieselmotoren, vorgesehen, die stationär oder in Fahrzeugen, so insbesondere Nutzfahrzeugen eingesetzt sind, sei es beispielsweise als Stauklappen in Abgas-Bremssystemen oder als Umlenkklappen in Abgas-Rückführsystemen.

Das Gehäuse 3 weist zur Aufnahme der in Richtung der Achse 5, und damit quer, insbesondere senkrecht zur Längsachse 9 des Abgaskanales 2 einander gegenüberliegenden Lagervorrichtungen 6, 7 zur Achse 5 konzentrische Ringflansche 10, 11 auf, gegen die stirnseitig jeweils ein deckelartiger Tragkörper 12, 13 eines Lagergehäuses verschraubt ist, der einen jeweiligen Ringbund 14, 15 trägt, welcher axial in Richtung der Achse 5 in die jeweilige Aufnahmeöffnung 16, 17 des Ringflansches 10, 11 eingreift. Der jeweilige Ringbund 14, 15 umschließt die Lageröffnung 18, 19 für einen Lagerkörper 20, 21, der zentral eine gegen den Abgaskanal 2 offene Ausnehmung 22, 23 aufweist, in welche ein mit der Klappe 4 verbundenes Kugelsegment 24, 25 etwa in Form eines Kugelabschnittes oder einer Kugelscheibe eingreift. In Richtung auf dieses Kugelsegment 24, 25 ist der jeweilige Lagerkörper 20, 21 nachgiebig abgestützt, insbesondere federbelastet, wobei diese Federabstützung 26, 27 im Ausführungsbeispiel jeweils durch ein Tellerfederpaket gebildet ist.

In Fig. 1 ist als Kugelsegment 24 lediglich eine Segmentscheibe vorgesehen, die insbesondere durch eine randseitige Ausbauchung der Klappe 4 gebildet ist. Aufgenommen ist das entsprechend abgeflachte Kugelsegment 24 in der kegelstumpf - förmigen Ausnehmung 22. Gegenüberliegend ist das Kugelsegment 25 als Kugelabschnitt ausgebildet und durch den der Klappe 4 zugeordneten und mit der Klappe 4 verbundenen Endteil der Welle 8 gebildet. Die diesen aufnehmende Ausnehmung 23 weist Kalottenform auf.

Insbesondere aus den Fig. 2 und 3 ist ersichtlich, dass der jeweilige Ringbund, wie für den Ringbund 15 gezeigt, in Ringsektoren, im Ausführungsbeispiel drei Ringsektoren 28 bis 30 unterteilt ist, von denen der Ringsektor 28 als Teil des eine Lagerschale für den Lagerkörper 21 bildenden Ringbundes 15 zum Tragkörper 13 lagefest ist, insbesondere mit dem Tragkörper 13 einstückig ausgebildet rist, während die Ringsecktoren 29, 30 vom Tragkörper 13 unabhängige Lagerschalenteile bilden, welche mit dem zum Tragkörper 13 lagefesten Ringsektor 28 über eine Federanordnung 31 tragend und radial gegen den Lagerkörper 21 verspannend verbunden sind. Die Federanordnung 31 umschließt, nach Art einer Federmanschette, die Ringsektoren 28 bis 30 an deren Außenumfang, wobei die Federanordnung 31 zum Ringbund 15 axial dadurch festgelegt ist, dass sie in einer umfangsseitigen Ringnut 32 des Ringbundes 15 liegt.

Das Ausführungsbeispiel veranschaulicht eine Ausbildung der Federanordnung 31 als Schraubenfeder 33, welche axial gegen die Flanken der Ringnut 32 anliegt, so dass über die Federanordnung 31 die vom Tragkörper 13 jeweils unabhängigen, eigenständige Bauteile bildende Ringsektoren 29, 30 des Ringbundes 15 auch axial festgelegt sind.

Dieser in Bezug auf die Lagervorrichtung 7 erläuterte Aufbau gilt in entsprechender Weise auch für die Lagervorrichtung 6. In beiden Fällen weist auch die im Ringflansch 10, 11 vorgesehene Aufnahmeöffnung 16, 17 für den jeweiligen Ringbund 14, 15 ein leichtes Radialspiel aut, das im Hinblick auf die Abstützung des jeweiligen Lagerkörpers 20, 21 nicht zum Tragen kommt, da der Lagerkörper 20, 21 durch die radiale Verspannung der losen Ringsegmente 29, 30 gegenüber dem jeweiligen, zum Tragkörper 12 bzw. 13 lagefesten Ringsegment 28 radial spielfrei abgestützt ist.

Nicht dargestellt ist in den Figuren eine erfindungsgemäße Ausgestaltung, bei der die Klappe mit zumindest einem der jeweiligen Lagerkörper, bezogen auf das Ausführungsbeispiel insbesondere dem nicht von der Welle 8 durchsetzten Lagerkörper 20 einstückig verbunden ist und somit nicht gegenüber dem Lagerkörper 20 drehbar abgestützt ist, sondern zusammen mit dem Lagerkörper 20 drehbar ist, für den dann der aufnehmende Ringbund 14 mit seinen Ringsektoren eine in Umfangsrichtung unterteilte Lagerschale bildet.

### Bezugszeichenliste

- 1: Abgasklappenanordnung
- 2: Abgaskanal
- 3: Gehäuse
- 4: Klappe
- 5: Achse
- 6: Lagervorrichtung
- 7: Lagervorrichtung
- 8: Welle
- 9: Kanalachse
- 10: Ringflansch
- 11: Ringflansch
- 12: Tragkörper
- 13: Tragkörper
- 14: Ringbund
- 15: Ringbund
- 16: Aufnahmeöffnung
- 17: Aufnahmeöffnung
- 18: Lageröffnung
- 19: Lageröffnung
- 20: Lagerkörper
- 21: Lagerkörper
- 22: Ausnehmung
- 23: Ausnehmung
- 24: Kugelsegment
- 25: Kugelsegment
- 26: Federabstützung
- 27: Federabstützung
- 28: Ringsektor
- 29: Ringsektor
- 30: Ringsektor
- 31: Federanordnung
- 32: Ringnut
- 33: Schraubenfeder
- 34: Durchgangsöffnung
- 35: Dichtung

## Patentansprüche

1. Abgasklappenanordnung (1) mit einer gehäuseseitigen Lagervorrichtung (6, 7), die einen in einem Ringbund (14, 15) aufgenommenen Lagerkörper (20, 21) aufweist, wobei der Lagerkörper (20, 21) über den Ringbund (14, 15) radial federnd auf eine vorgegebene Radiallage verspannt gehalten ist,
**dadurch gekennzeichnet,**
**dass** der Ringbund (14, 15) in in Umfangsrichtung getrennte Ringsektoren (28 bis 30) aufgeteilt ist, die radial federnd zusammengespannt sind.

2. Abgasklappenanordnung nach Anspruch 1,
**dadurch gekennzeichnet,**
**dass** von den federnd zusammengespannten Ringsektoren (28 bis 30) des Ringbundes (14, 15) zumindest ein Ringsektor (28) zur Lagervorrichtung (6, 7) lagefest ist.

3. Abgasklappenanordnung nach Anspruch 1 oder 2,
**dadurch gekennzeichnet,**
**dass** der Ringbund (14, 15) an einem Tragkörper (12, 13) der Lagervorrichtung (6, 7) vorgesehen ist.

4. Abgasklappenanordnung nach einem der vorhergehenden Ansprüche,
**dadurch gekennzeichnet,**
**dass** der Ringbund (14, 15) aus jeweils zumindest einem zum Tragkörper (12, 13) lagefesten Ringsektor (28) und zum Tragkörper (12, 13) radial beweglichen Ringsektor (29, 30) besteht.

5. Abgasklappenanordnung nach Anspruch 4,
**dadurch gekennzeichnet,**
**dass** der zumindest eine radial bewegliche Ringsektor (29, 30) radial elastisch nachgiebig mit dem Tragkörper (12, 13) verbunden ist.

6. Abgasklappenanordnung nach Anspruch 4,
**dadurch gekennzeichnet,**
**dass** der zumindest eine radial bewegliche Ringsektor (29, 30) ein vom Tragkörper (12, 13) getrenntes Bauteil bildet.

7. Abgasklappenanordnung nach einem der Ansprüche 1 bis 4,
**dadurch gekennzeichnet,**
**dass** der Ringbund (14, 15) zumindest drei Ringsektoren (28 bis 30) umfasst, von denen einer einen einstückigen und zum Tragkörper (12, 13) lagefesten Teil bildet.

8. Abgasklappenanordnung nach einem der Ansprüche 1 bis 7,
**dadurch gekennzeichnet,**
**dass** die Ringsektoren (28 bis 30) über eine umschließende Federanordnung (31), insbesondere eine umschließende Schraubenfeder (33), manschettenartig zusammengespannt sind.

9. Abgasklappenanordnung nach einem der Ansprüche 3 bis 8,
**dadurch gekennzeichnet,**
**dass** die Radiallage des Lagerkörpers (20, 21) zum Ringbund (14, 15) durch den zumindest einen zum Tragkörper (12, 13) lagefesten Ringsektor (28) vorgegeben ist.

10. Abgasklappenanordnung nach einem der Ansprüche 1 bis 9,
**dadurch gekennzeichnet,**
**dass** die Lagervorrichtung (6, 7) sphärische Lagermittel für die Klappe (4) aufweist und dass die Lagermittel ein kugelförmiges Segment (24, 25) und eine sich gegen dieses kugelförmige Segment (24, 25) aufweitende, dieses aufnehmende Ausnehmung (22, 23) umfassen, von denen das kugelförmige Segment (24, 25) oder die Ausnehmung (22, 23) am Lagerkörper (20, 21) vorgesehen ist.

11. Abgasklappenanordnung nach Anspruch 10,
**dadurch gekennzeichnet,**
**dass** die Ausnehmung (22, 23) in insbesondere kalottenförmiger Gestaltung am Lagerkörper (20, 21) vorgesehen ist.

12. Klappenanordnung nach Anspruch 10,
**dadurch gekennzeichnet,**
**dass** das kugelförmige Segment (24, 25) Teil einer mit der Klappe (4) verbundenen Welle (8) ist.

13. Klappenanordnung nach einem der vorhergehenden Ansprüche,
**dadurch gekennzeichnet,**
**dass** die Klappe (4) über in Richtung ihrer Achse (5) verspannende Federmittel axial gegen die Lagervorrichtung (6, 7) verspannt ist.

14. Klappenanordnung nach Anspruch 13,
**dadurch gekennzeichnet,**
**dass** der Lagerkörper (20, 21) gegen den Tragkörper (12, 13) über die Federmittel abgestützt ist.

## Claims

1. Exhaust-gas flap arrangement (1), having a housing-mounted bearing device (6, 7) which has a bearing body (20, 21) received in an annular collar (14, 15), wherein the bearing body (20, 21) is held braced radially resiliently in a predefined radial position by means of the annular collar (14, 15),
**characterized**
**in that** the annular collar (14, 15) is divided into annular sectors (28 to 30) which are separate in the circumferential direction and which are radially resiliently clamped together.

2. Exhaust-gas flap arrangement according to Claim 1,
**characterized**
**in that**, of the annular sectors (28 to 30) of the annular collar (14, 15) which are resiliently clamped together, at least one annular sector (28) is positionally fixed with respect to the bearing device (6, 7).

3. Exhaust-gas flap arrangement according to Claim 1 or 2,
**characterized**
**in that** the annular collar (14, 15) is provided on a carrier body (12, 13) of the bearing device (6, 7).

4. Exhaust-gas flap arrangement according to one of the preceding claims,
**characterized**
**in that** the annular collar (14, 15) is composed of in each case at least one annular sector (28) which is positionally fixed with respect to the carrier body (12, 13) and annular sector (29, 30) which is radially movable with respect to the carrier body (12, 13).

5. Exhaust-gas flap arrangement according to Claim 4,
**characterized**
**in that** the at least one radially movable annular sector (29, 30) is connected in a radially elastically flexible manner to the carrier body (12, 13).

6. Exhaust-gas flap arrangement according to Claim 4,
**characterized**
**in that** the at least one radially movable annular sector (29, 30) forms a component which is separate from the carrier body (12, 13).

7. Exhaust-gas flap arrangement according to one of Claims 1 to 4,
**characterized**
**in that** the annular collar (14, 15) comprises at least three annular sectors (28 to 30), one of which forms a part which is in one piece with and positionally fixed with respect to the carrier body (12, 13).

8. Exhaust-gas flap arrangement according to one of Claims 1 to 7,
**characterized**
**in that** the annular sectors (28 to 30) are clamped together in the manner of a sleeve by means of an encircling spring arrangement (31), in particular an encircling helical spring (33).

9. Exhaust-gas flap arrangement according to one of Claims 3 to 8,
**characterized**
**in that** the radial position of the bearing body (20, 21) with respect to the annular collar (14, 15) is predefined by the at least one annular sector (28) which is positionally fixed with respect to the carrier body (12, 13).

10. Exhaust-gas flap arrangement according to one of Claims 1 to 9,
**characterized**
**in that** the bearing device (6, 7) has spherical bearing means for the flap (4) and in that the bearing means comprise a spherical segment (24, 25) and a recess (22, 23) which widens towards said spherical segment (24, 25) and receives the latter, of which the spherical segment (24, 25) or the recess (22, 23) is provided on the bearing body (20, 21).

11. Exhaust-gas flap arrangement according to Claim 10,
**characterized**
**in that** the recess (22, 23) is provided in particular in spherical-cap-like form on the bearing body (20, 21).

12. Flap arrangement according to Claim 10,
**characterized**
**in that** the spherical segment (24, 25) is part of a shaft (8) which is connected to the flap (4).

13. Flap arrangement according to one of the preceding claims,
**characterized**
**in that** the flap (4) is braced axially against the bearing device (6, 7) by spring means which exert a bracing action in the direction of the axis (5) of said flap.

14. Flap arrangement according to Claim 13,
**characterized**
**in that** the bearing body (20, 21) is supported against the carrier body (12, 13) via the spring means.

## Revendications

1. Agencement de volet des gaz d'échappement (1) comprenant un dispositif de palier (6, 7) du côté du boîtier, lequel dispositif de palier comprend un corps de palier (20, 21) logé dans un épaulement annulaire (14, 15), le corps de palier (20, 21) étant maintenu de manière serrée et de manière radialement élastique en une position radiale prédéfinie au moyen de l'épaulement annulaire (14, 15),
**caractérisé en ce que**
l'épaulement annulaire (14, 15) est divisé en secteurs annulaires (28 à 30) séparés dans la direction périphérique, lesquels sont serrés ensemble de manière radialement élastique.

2. Agencement de volet des gaz d'échappement selon la revendication 1,
**caractérisé en ce que**
parmi les secteurs annulaires (28 à 30), serrés ensemble de manière élastique, de l'épaulement annulaire (14, 15), au moins un secteur annulaire (28) est fixe en position par rapport au dispositif de palier (6, 7).

3. Agencement de volet des gaz d'échappement selon la revendication 1 ou 2,
**caractérisé en ce que**
l'épaulement annulaire (14, 15) est prévu sur un corps de support (12, 13) du dispositif de palier (6, 7).

4. Agencement de volet des gaz d'échappement selon l'une quelconque des revendications précédentes,
**caractérisé en ce que**
l'épaulement annulaire (14, 15) est constitué respectivement d'au moins un secteur annulaire (28) fixe en position par rapport au corps de support (12, 13) et d'au moins un secteur annulaire (29, 30) radialement mobile par rapport au corps de support (12, 13).

5. Agencement de volet des gaz d'échappement selon la revendication 4,
**caractérisé en ce que**
l'au moins un secteur annulaire (29, 30) radialement mobile est relié au corps de support (12, 13) de manière élastiquement radialement déformable.

6. Agencement de volet des gaz d'échappement selon la revendication 4,
**caractérisé en ce que**
l'au moins un secteur annulaire (29, 30) radialement mobile forme un élément séparé du corps de support (12, 13).

7. Agencement de volet des gaz d'échappement selon l'une quelconque des revendications 1 à 4,
**caractérisé en ce que**
l'épaulement annulaire (14, 15) comporte au moins trois secteurs annulaires (28 à 30), parmi lesquels l'un forme une partie d'une seule pièce et fixe en position par rapport au corps de support (12, 13).

8. Agencement de volet des gaz d'échappement selon l'une quelconque des revendications 1 à 7,
**caractérisé en ce que**
les secteurs annulaires (28 à 30) sont serrés ensemble à la manière d'un manchon au moyen d'un agencement de ressort enveloppant (31), en particulier d'un ressort hélicoïdal enveloppant (33).

9. Agencement de volet des gaz d'échappement selon l'une quelconque des revendications 3 à 8,
**caractérisé en ce que**
la position radiale du corps de palier (20, 21) par rapport à l'épaulement annulaire (14, 15) est prédéfinie par l'au moins un secteur annulaire (28) fixe en position par rapport au corps de support (12, 13).

10. Agencement de volet des gaz d'échappement selon l'une quelconque des revendications 1 à 9,
**caractérisé en ce que**
le dispositif de palier (6, 7) comprend des moyens de palier sphériques pour le volet (4) et **en ce que** les moyens de palier comportent un segment sphérique (24, 25) et un évidement (22, 23) s'élargissant en direction de cet élément sphérique (24, 25) et logeant ce dernier, parmi lesquels le segment sphérique (24, 25) ou l'évidement (22, 23) est prévu sur le corps de palier (20, 21).

11. Agencement de volet des gaz d'échappement selon la revendication 10,
**caractérisé en ce que**
l'évidement (22, 23) est prévu sur le corps de palier (20, 21) sous une configuration notamment en forme de calotte.

12. Agencement de volet selon la revendication 10,
**caractérisé en ce que**
le segment sphérique (24, 25) fait partie d'un arbre (8) relié au volet (4).

13. Agencement de volet selon l'une quelconque des revendications précédentes,
**caractérisé en ce que**
le volet (4) est serré axialement contre le dispositif de palier (6, 7) au moyen de moyens de ressort serrés en direction de son axe (5).

14. Agencement de volet selon la revendication 13,
**caractérisé en ce que**
le corps de palier (20, 21) s'appuie contre le corps de support (12, 13) au moyen des moyens de ressort.
